# EUROPÄISCHE PATENTSCHRIFT

(11) **EP 3 397 029 B1**
(45) Veröffentlichungstag und Bekanntmachung des Hinweises auf die Patenterteilung: **02.06.2021**
(21) Anmeldenummer: 17167757.8
(22) Anmeldetag: 24.04.2017
(51) Int. Cl.: F21V 33/00, H05B 47/16, H05B 47/18, H05B 47/19

(54) **KOMBINIERTE SENDE- UND LEUCHTVORRICHTUNG**
COMBINED TRANSMITTING AND LIGHTING DEVICE
DISPOSITIF D'ÉCLAIRAGE ET D'ENVOI COMBINÉ

(43) Veröffentlichungstag der Anmeldung: 31.10.2018
(73) Patentinhaber: Deutsche Telekom AG, 53113 Bonn (DE)
(72) Erfinder: Westphal, Fritz-Joachim, 12347 Berlin (DE); Woesner, Hagen, 10405 Berlin (DE); Henke, Katja, 12159 Berlin (DE)
(74) Vertreter: Braun-Dullaeus Pannen Emmerling Patent- & Rechtsanwaltspartnerschaft mbB

(56) Entgegenhaltungen:
- DE-A1-102012 016 796
- US-A1- 2009 310 577
- US-A1- 2012 163 828

## Beschreibung

Die Erfindung betrifft eine kombinierte Sende- und Leuchtvorrichtung in der Form einer herkömmlichen Lampe, beispielsweise in der Form einer Glühbirne, die zumindest abschnittsweise durch einen lichtdurchlässigen Hohlkörper ausgebildet ist. An einem Ende weist die Vorrichtung einen standardisierten Lampensockel auf, durch den eine Verbindung mit einem Stromnetz bereitgestellt ist. Im Hohlkörper ist ein Leuchtmittel, insbesondere eine LED, angeordnet und über den Lampensockel mit dem Stromnetz verbunden. Zudem umfasst die Vorrichtung ein PLC-Modul (Powerline Communication) zur Datenübertragung über das Stromnetz, wobei das PLC-Modul zumindest teilweise in den Hohlkörper aufgenommen ist. Ferner umfasst die Vorrichtung einen Transceiver, insbesondere einen WiFi-Transceiver, und einen Controller, wobei der Controller mit dem PLC-Modul verbunden ist und den Transceiver steuert.

Powerline Communication (PLC) bezeichnet eine Technik, die vorhandene elektrische Leitungen im Niederspannungsnetz zum Aufbau eines lokalen Netzwerks zur Datenübertragung nutzt, sodass keine zusätzliche Verkabelung notwendig ist. Über Adapter nach dem weitverbreiteten Homeplug- bzw. IEEE-1901-Standard, lassen sich Daten mit maximal 1200 Mbit/s bei einer Reichweite von bis zu 300 m übertragen. Die Adapter werden in eine Steckdose eingebracht und über eine eingebaute Ethernet-Schnittstelle mit einem Endgerät verbunden.

Ein Datensignal wird hierbei von einem Sender im Netzwerk in einem Hochfrequenzbereich, in der Regel zwischen 2 MHz und 68 MHz, auf die Stromleitung moduliert und von einem empfangenden Adapter wieder demoduliert. Die maximale Datenrate lässt sich jedoch nur über wenige Meter erreichen. Durch eine Nutzung von Orthogonal Frequency-Division Multiplexing (OFDM) und verschiedenen Abstufungen von Datenraten wird aber, ähnlich wie IEEE 802.11 WLAN, eine dynamische Anpassung der tatsächlichen Datenrate an die jeweils verfügbare Übertragungsqualität erreicht.

Bekanntermaßen ist eine Leuchtdiode (LED) ein lichtemittierendes HalbleiterBauelement, dessen elektrische Eigenschaften einer Diode entsprechen. Fließt durch die Diode elektrischer Strom in Durchlassrichtung, so strahlt die LED Licht mit einer vom Halbleitermaterial und der Dotierung abhängigen Wellenlänge ab. LEDs werden allgemein als die Zukunft der Beleuchtung in Wohn- und Geschäftsräumen angesehen, wobei ein sehr geringer Stromverbrauch mit relativ freier gestaltbar von Farben und Formen (vergleiche OLED) erreicht wird. Nachteile bisheriger Stromsparlampen werden durch LEDs weitgehend eliminiert.

WLAN (IEEE 802.11) ist bekanntermaßen eine kabellose, weitverbreitete Technologie zur Datenübertragung im Heimbereich. Entsprechend der Standards 802.11 ac und 802.11 ad werden Datenübertragungsraten von mehreren Gbit/s erreicht, wobei die Übertragungsschicht auf Multiple Input Multiple Output (MIMO) und OFDM zugreift.

Eine Kombination aus PLC und WLAN wird im Heimbereich typischerweise als WLAN-Repeater verwendet. Hierbei wird die Stromleitung zur Weiterleitung von Datenpaketen genutzt, wobei ein PLC-Modul in einen Router entweder integriert (z.B. FritzBox) oder separat über ein Ethernet-Kabel (z.B. Devolo) angeschlossen ist. Der WLAN-Repeater wird manuell oder halbautomatisch auf dieselbe SSID konfiguriert, die auch der Heimrouter abstrahlt. Dadurch wird die Dichte der WLAN-Access Points (WLAN-AP) erhöht und Bereiche mit schwacher Abdeckung können ausgeleuchtet werden. Im Heimbereich findet typischerweise keine zentrale Steuerung der Sendefrequenz statt, und der Zugang zum Netz wird durch WPA2 mit pre-shared keys (PSK) gewährleistet, was keine Kommunikation in der Steuerungsschicht zwischen Heimrouter und WLAN-Repeater notwendig macht.

Das CN 203537606 U beschreibt eine Lampe, welche einen WiFi-Transceiver, eine LED, einen Controller und eine PLC-Verbindung umfasst. Hierbei ist gelehrt, dass der Controller über die PLC-Verbindung mit dem WiFi-Transceiver und der LED verbunden ist. Eine Stromzufuhr wird mittels des Lampensockels bereitgestellt. Es wird gelehrt, dass ein Benutzer die Lampe, insbesondere zum Zwecke einer Helligkeitsregulierung, mit seinem Smartphone steuert, indem der Benutzer via WiFi Daten an den WiFi-Transceiver der Lampe sendet. Diese Daten werden von dem WiFi-Transceiver über die PLC-Verbindung an den Controller weitergeleitet, der diese auswertet und dann über die PLC-Verbindung die LED ansteuert, sodass die LED je nach Wunsch des Benutzers heller oder dunkler leuchtet bzw. an oder ausgeschaltet wird. Nachteilig beschreibt diese Druckschrift lediglich eine Art Fernzugriff durch den Benutzer auf die Lampe. In der Druckschrift ist nicht beschrieben, wie der WiFi-Transceiver dazu genutzt werden kann, um für den Benutzer eine interaktive Verbindung zum Internet oder einem lokalen Netzwerk herzustellen.

DE 10 20120 16796 A1 zeigt in diesem Zusammenhang eine Lampe mit einem Anschlusssockel, wobei der Anschlusssockel eine Kontaktierungseinheit für Netzanschluss bildet und im Innenraum der Lampe folgende Baukomponenten angeordnet sind: i) ein Netzteil/Konverter für die Energieversorgung eines Leuchtmittels vorzugsweise LED-Leuchtmittels sowie zur Energieversorgung der elektrischen/elektronischen Baukomponenten der Lampe, ii) eine Kamera, iii) eine Prozessor- und Speichereinheit für die Ansteuerung der elektrischen/elektronischen Baukomponenten der Lampe sowie für die Auswertung/Verarbeitung von zugeleiteten Signalen und für deren Abspeicherung.

Die US 2012/163828 A1 beschreibt in diesem Zusammenhang eine Vorrichtung mit einem galvanischen Verbinder, der konfiguriert ist, um eine Verbindung mit einem entsprechenden galvanischen Verbinder in einer Leuchte herzustellen; eine Netzwerkschnittstelle, die konfiguriert ist, um als Knoten in einem Datenkommunikationsnetzwerk zu arbeiten; und eine Kommunikationsschnittstelle zum Ermöglichen der Kommunikation zwischen einer Umgebung neben der Leuchte und dem Datenkommunikationsnetz.

Die US 2009/310577 A1 beschreibt in diesem Zusammenhang ein drahtloses LAN-System mit einem drahtlosen LAN-Client-Terminal und einem drahtlosen LAN-Zugangspunkt, der eine drahtlose Kommunikation mit dem drahtlosen LAN-Client-Terminal durchführt, um das drahtlose LAN-Client-Terminal zu verbinden und an ein externes Netzwerk anzuschließen, wobei der WLAN-Zugangspunkt an eine Beleuchtungsvorrichtung angeschlossen ist.

Es ist die Aufgabe der Erfindung, eine Vorrichtung anzugeben, die es ermöglicht, ein Netzwerk mit einer verbesserten Leistung auszubilden und zugleich flexibel und energieschonenden nutzbar zu sein.

Diese Aufgabe wird erfindungsgemäß durch eine Vorrichtung gemäß Anspruch 1, eine Verwendung gemäß Anspruch 6 und ein System gemäß Anspruch 7 gelöst.

Der bei der erfindungsgemäßen Vorrichtung realisierte Kerngedanke liegt darin, dass das PLC-Modul eine datenleitende Verbindung über das Stromnetz zu einem lokalen Netzwerk ausbildet, wodurch der Transceiver eine Wireless Local Area Network Access Point-Funktionalität (WLAN AP-Funktionalität) bereitstellt. Hierdurch wird erreicht, dass schon vorhandene elektrische Installationen in einem Haushalt optimal ausgenutzt werden, indem die Vorrichtung gleichzeitig einen Raum oder das Umfeld eines Hauses beleuchtet und eine WLAN Verbindung zum Internet ermöglicht. Der Benutzer muss also kein zusätzliches Gerät zu den schon vorhandenen Lampen in dem Raum aufstellen, sondern nur eine herkömmliche Lampe durch die erfindungsgemäße Vorrichtung ersetzen. Da die Kommunikation der erfindungsgemäßen Vorrichtung mittels des PLC-Moduls über das Stromnetz realisiert ist, wird eine Einschränkung durch eine WLAN-Vermaschung (effektive Halbierung der verfügbaren Bandbreite durch Senden und Empfangen auf derselben Frequenz) vermieden, sodass eine schnelle und flächendeckende Internetausleuchtung des Haushalts bereitgestellt wird. Je nach benötigtem Lux-Wert kann die Anzahl der LEDs in der Vorrichtung verändert werden, sodass auch eine Integration einer Mehrzahl von LEDs vorgesehen sein kann.

Die standardisierten Lampensockel umfassen zumindest die gängigen Typen E14, E27, G4, GU4, GU5.3 oder GU10 aber auch zukünftige standardisierte Lampensockel. Der Hohlkörper besteht zumindest abschnittsweise aus einem Glas oder glasähnlichem Material und ist durchlässig für sichtbares Licht. WLAN-Technologie wird bei Wellenlängen sendet, die typischerweise größer sind als 1 cm, es muss keine "Line of sight" Verbindung zwischen dem WLAN-Transceiver und einem Endgerät, insbesondere einem Smartphone, einem Notebook oder einem weiteren WLAN-Transceiver, ausgebildet sein.

Ein Schalter ist zum An- bzw. Ausschalten der Vorrichtung in dem Hohlkörper vorgesehen, sodass die WLAN-Transceiver und die LED Komponente(n) nicht ununterbrochen Energie verbraucht und je nach Bedarf an- und ausschaltbar ist. Es ist kein Schalter vorzusehen der die gesamte Energiezufuhr für die Vorrichtung unterbricht, da zumindest die Controller Komponente immer versorgt seien sollte, um einen automatische Ein- und Ausschaltvorgang zu ermöglichen.

Bevorzugt ist der Schalter durch den Controller auslösbar und stellt die Funktionalität eines Dimmers bereit. Der Controller steuert hierbei den Stromfluss zur LED, sodass diese in verschiedenen Helligkeitsstufen leuchtet. Im Zuge dessen ist der Schalter durch den Controller steuerbar, sodass die entsprechenden Befehle durch den Nutzer über ein Heimnetzwerk über das Stromnetz oder über die drahtlose WiFi Verbindung an den Controller gesendet werden. Der Controller ermöglicht hierbei, dass die WiFi-Funktionalität und die LED unabhängig voneinander an-bzw. ausgeschaltet werden können. Die Vorrichtung ist also in verschiedenen Betriebsmodi einstellbar. In einem ersten Betriebsmodus ist sowohl die WiFi-Funktionalität als auch die LED ausgeschaltet. In einem zweiten Betriebsmodus ist nur die LED angeschaltet. In einem dritten Betriebsmodus ist nur die WiFi-Funktionalität angeschaltet. In einem vierten Betriebsmodus sind sowohl die WiFi-Funktionalität als auch die LED eingeschaltet.

Der Schalter steuert das An -bzw. Ausschalten der Vorrichtung mittels des Controllers tageszeitabhängig. Unter diesen Voraussetzungen kann der Benutzer, zum Beispiel mittels geeigneter Software, festlegen zu welchem Zeitpunkt die LED leuchten soll oder zu welchem Zeitpunkt die WLAN Funktionalität aktiv ist. Beides ist typischerweise zur Schlafenszeit deaktiviert.

Mittels des Schalters sind wahlweise das Leuchtmittel und/oder der Transceiver an- und ausschaltbar. Dies ermöglicht dem Benutzer einen der vorgehend beschriebenen Betriebsmodi seiner Wahl zu wählen.

Bevorzugt ist der Schalter über das PLC-Modul steuerbar. Hierdurch wird ermöglicht, dass Befehle an den Schalter durch den Benutzer sowohl über das Stromnetz als auch über den WiFi-Transceiver übertragbar sind.

Gemäß einem Aspekt der Erfindung ist eine Verwendung der vorstehend beschriebenen erfindungsgemäßen Vorrichtung in einer Außenfassadenbeleuchtung, insbesondere in einer Hausnummernbeleuchtung, vorgesehen. Durch einen Einbau der Sende- und Leuchtvorrichtung in die Hausnummernbeleuchtung kann der Benutzer durch ein mobiles Endgerät mit seinem Heimnetzwerk in Datenaustausch treten, wenn er sich von außen seinem Haus nähert. Dieser Aspekt umfasst auch die Annäherung an andere Gebäudeeinheiten, welche ein internes Netzwerk bereitstellen. Dies kann beispielsweise zu einer oder Authentifizierung des Benutzers verwendet werden, sodass beispielsweise ein Vorgang in einem Haus auslösbar ist der einem Bewohner automatisch die Tür öffnet, wenn sich dieser der Tür nähert.

Gemäß einem weiteren Aspekt der Erfindung ist ein System vorgesehen, welches eine Vielzahl der vorstehend beschriebenen erfindungsgemäßen Vorrichtung umfasst, wobei die Vorrichtungen durch ein Netzwerk mit einer zentralen Mobilität- und Adressverwaltung verbunden sind und dass hierdurch ein virtueller WLAN-Zugangspunkt in Form von Hot-Spots ausgebildet ist.

Weitere Vorteile, Eigenschaften und Weiterbildung der Erfindung ergeben sich aus den abhängigen Ansprüchen sowie aus der nachstehenden Beschreibung von bevorzugten Ausführungsbeispielen.

Die Erfindung wird nachstehend unter Bezugnahme auf die anliegenden Zeichnungen anhand bevorzugter Ausführungsbeispielen näher erläutert.
- Fig. 1: zeigt einen Schnittmengenbereich der technischen Gebiete der Sende- und Leuchtvorrichtung.
- Fig. 2: zeigt einen schematischen Aufbau einer Sende- und Leuchtvorrichtung.
- Fig. 3: zeigt eine Verwendung der Sende-und Leuchtvorrichtung aus Fig. 2 an einer Außenfassade einer Gebäudeeinheit.
- Fig. 4: zeigt ein System von einer Vielzahl von Sende- und Leuchtvorrichtungen aus Fig. 2.

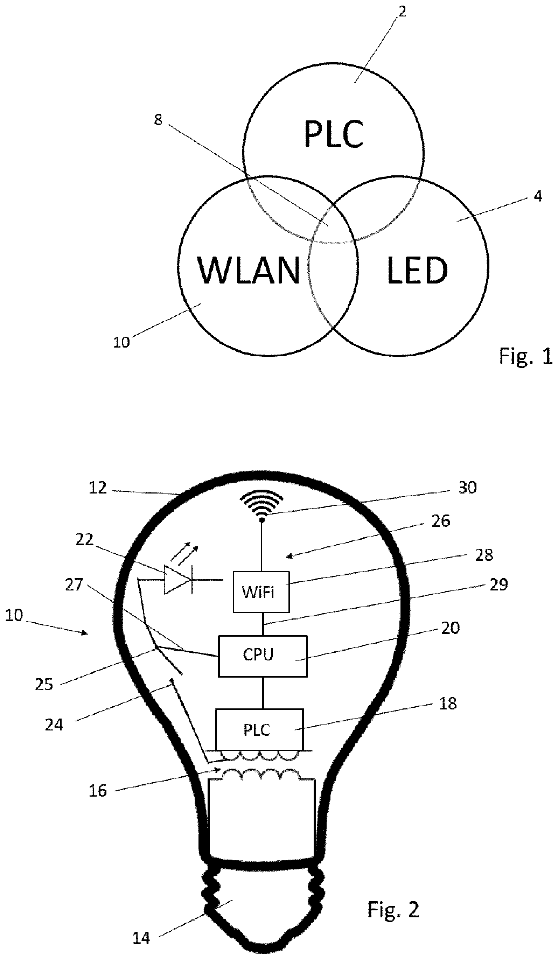

Fig. 1 gibt einen Überblick über die relevanten technischen Gebiete in deren Schnittmengenbereich 8 die Sende- und Leuchtvorrichtung 10 anzusiedeln ist: Der Schnittmengenbereich 8 der Sende- und Leuchtvorrichtung 10 ist im Bereich der Überlappung der PLC-Technik 2, der LED-Technik 4 und der WLAN-Technik 6 ausgewiesen. Die Sende- und Leuchtvorrichtung 10 verknüpft diese Technikgebiete dahingehend, dass sie einem Benutzer bzw. einen Bewohner eine glühbirnenähnliche Sende- und Leuchtvorrichtung 10 bereitstellt mit welcher er auf einfache Weise eine vorhandene elektrische Haushaltsinstallationen nutzen kann, um Räume zeitgleich mit WLAN-Funk und mit Licht auszuleuchten.

Fig. 2 zeigt eine schematische Ansicht der Sende- und Leuchtvorrichtung 10 in Form eines Querschnitts durch die Sende- und Leuchtvorrichtung 10. Eine äußere Form der Sende- und Leuchtvorrichtung 10 wird durch einen glühbirnenähnlichen Hohlkörper 12 und einen Lampensockel ausgebildet. In der Darstellung ist der Hohlkörper 12 in einer länglich erstreckten Form, in der Art einer 230V-Retrofit-Lampe, dargestellt, wobei dies nicht als Beschränkung zu sehen ist, da die Erfindung weitestgehend unabhängig in Bezug auf die äußere Form ist, solange notwendige Bauteile in dem Hohlkörper 12 aufnehmbar sind. An einem Ende des Hohlkörpers 12 ist der Lampensockel 14 angeschlossen. Mittels des Lampensockels 14 wird eine Verbindung zu einem Stromnetz hergestellt, wenn der Benutzer die Sende- und Leuchtvorrichtung 10 in einer dafür vorgesehene Lampenfassung eindreht. Im Inneren des Hohlkörpers 12 ist im Bereich des Lampensockels 14 eine Schnittstelle 16 für die Stromversorgung und das PLC-Modul 18 vorgesehen. Das PLC-Modul 18 ist vorliegend mit einem Controller 20, insbesondere einen CPU-Controller 20 verbunden. Der CPU-Controller 20 ist über eine erste Verbindung 27 an einem Knotenpunkt 25 sowohl mit einem Schalter 24 als auch mit einer LED 22 und über eine andere Verbindung 29 mit einem WiFi-Transceiver 26 vernetzt. Der WiFi-Transceiver 26 umfasst ein WiFi-Control-Modul 28 und eine WiFi-Antenne 30.

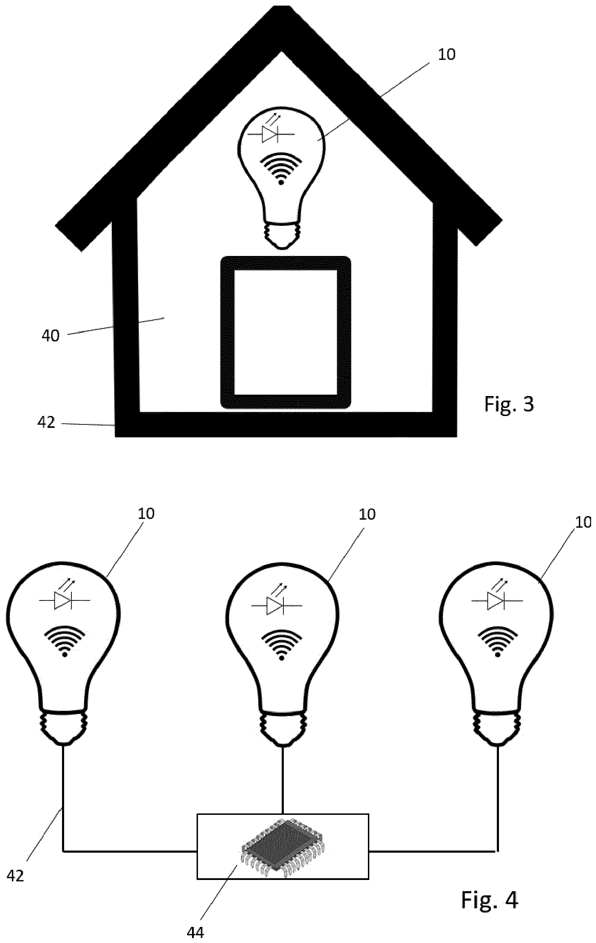

Fig. 3 zeigt eine Verwendung der Sende- und Leuchtvorrichtung 10 an einer Außenfassade 40 einer Gebäudeeinheit 42, wobei die Sende-und Leuchtvorrichtung 10 in eine Fassung einer Hausnummernbeleuchtung eingebracht ist.

Fig. 4 zeigt eine Vielzahl von Sende- und Leuchtvorrichtungen 10, welche mittels eines PLC-Netzwerks 42 mit einer zentralen Mobilität- und Adressverwaltung 44 verbunden sind.

Die Erfindung funktioniert nun wie folgt:
Oft kommt es vor, dass in einem Gebäude die WLAN Abdeckung nur unzureichend ausfällt, da beispielsweise Wände und/oder größere Entfernungen ein Abschwächen der Funkwellen bedingen. Die Reichweite von WLAN-Netzen kann, sowohl im Heimbereich als auch in öffentlichen Gebäuden, dadurch erhöht werden, dass beispielsweise WLAN-Repeater oder WLAN-Accesspoints angebracht werden. Hierbei werden in Räumen zusätzlich zur schon vorhandenen Elektroinstallation weitere Geräte installiert. Typischerweise beinhaltet die Elektroinstallation dieser Räume Lampenfassungen, welche an das Stromnetz angeschlossen sind, um Lampen einzudrehen, die die Räume ausleuchten. Die Sende- und Leuchtvorrichtung 10 ermöglicht eine gleichzeitige Ausleuchtung von Räumen in der Funktionalität einer Lampe als auch in der Funktionalität eines WLAN-Access Points ohne die Installation weiterer Geräte.

Auf das vorhandene Stromnetz werden mittels der PLC-Technik Daten, insbesondere Daten eines Heimnetzwerks, auf moduliert. Diese Daten werden mittels des Lampensockels 14 der Sende- und Leuchtvorrichtung 10 (siehe Fig. 2) über die Schnittstelle 16 an das PLC-Modul übertragen. Das PLC-Modul demoduliert die mit dem Strom gesendeten Daten insoweit, sodass der Controller 20 diese Daten verarbeiten kann. Zugleich wird über die Schnittstelle 16 eine Stromversorgung der einzelnen Komponenten der Sende- und Leuchtvorrichtung 10 bereitgestellt. Ist der Schalter 14 geschlossen wird die LED 22 mit Strom versorgt und leuchtet einen Raum in der Art einer konventionellen Lampe aus. Der Controller 20 steuert den Wifi-Transceiver 26. Hierbei steuert das Wifi-Control-Modul 28 die Wifi-Antenne 30 und leuchtet den Raum mit einem WLAN-Netz aus. Der Benutzer kann nun mittels eines Notebooks, eines Smartphones oder einem anderen, zur drahtlosen Kommunikation fähigen, Endgerät über dieses erzeugte WLAN-Netz eine Verbindung mit seinem Heimnetz aufbauen und sowohl Daten aus dem Internet empfangen als auch Daten an das Internet senden. Das WLAN-Netz entspricht den Standards 802.11ac und 802.11 ad. Diese erreichen Datenübertragungsraten von mehreren Gbit/s, wobei die Übertragungsschicht auf Multiple Input Multiple Output (MIMO) und OFDM zugreift.

Der Zugang zu dem Heimnetz mittels des Wifi-Transceivers 26 wird über WPA-EAP authentifiziert/autorisiert. Um sinnvoll genutzt zu werden benötigt die als WLAN-Zugang ausgebildete Sende- und Leuchtvorrichtung 10 einen Uplink, gegebenenfalls mit Zugang zum Intranet oder Internet. Hierfür wird eine PLC-Leitung benutzt, an einer geeigneten Stelle wird dann ein Datensignal an einem LAN-Switch abgeleitet durch welchen der Uplink erfolgt.

Die Steuerung der LED 22 durch den Controller 20 für die Schaltung 25 ist helligkeit-oder tageszeitabhängig oder spontan. In einer alternativen Variante wird eine Steuerung der LED 22 zentral vorgenommen, zum Beispiel durch eine Zeitschaltuhr. Die LED 22 und der Wifi-Transceiver 26 können durch den Controller 20 wahlweise zusammen oder einzeln angesteuert werden.

Die Erfindung wurde vorstehend im Zusammenhang mit einem Heimnetzwerk in einer Wohnung beschrieben. Es versteht sich, dass das Anwendungsgebiet nicht auf ein Heimnetzwerk begrenzt ist, sondern auch für Firmennetzwerke bzw. öffentliche Netzwerke und die entsprechend zugeordneten Gebäude verwendbar ist. Um Firmengebäude bzw. öffentliche Gebäude zufriedenstellend mit WLAN auszuleuchten ist das System gemäß Fig. 4 vorgesehen, wobei eine Vielzahl der Sende- und Leuchtvorrichtungen 10 installiert sind, welche beispielsweise in verschiedenen Räumen in die entsprechenden Lampenfassungen eingedreht sind. Die Sende- und Leuchtvorrichtungen 10 in Fig. 4 sind über das PLC-Netzwerk 42 mit der Mobilität-Adressverwaltung 44 verbunden, welche eine Übergabe der Funksignale an die entsprechende Sende- und Leuchtvorrichtungen 10 steuert und sicherstellt.

Die Verwendung der Sende- und Leuchtvorrichtung 10 an der Außenfassade 40 der Gebäudeeinheit 42 gemäß Fig. 3 funktioniert wie folgt:
Mittels der PLC-Technik ist die Fassung der Hausnummernbeleuchtung mit dem Heimnetzwerk und dadurch mit dem Internet verbunden. Indem die Sende- und Leuchtvorrichtung 10 in die Fassung der Hausnummernbeleuchtung eingebracht ist, nimmt das mobile Endgerät des Benutzers Kontakt mit dem Heimnetzwerk auf, wenn sich der Benutzer der Gebäudeeinheit 42 nähert. In dem Heimnetzwerk sind entsprechende Informationen des mobilen Endgeräts gespeichert, sodass eine Authentifizierung erfolgt und die LED 22 automatisch zu leuchten beginnt, wenn sich der Benutzer einer Haustür, und dadurch der Hausnummernbeleuchtung, nähert. Zugleich kann mittels dieser Authentifizierung oder beispielsweise eines PIN-Codes, welchen der Benutzer über sein mobiles Endgerät eingibt, über eine Kontrolleinheit im Heimnetzwerk ein Vorgang ausgelöst werden, welcher die Haustür automatisch öffnet, sodass der Benutzer einen konventionellen Haustürschlüssel nicht verwenden muss. Das Prinzip der automatischen Türöffnung bei einer Annäherung ist aus dem Automobilbereich bekannt.

## Patentansprüche

1. Vorrichtung, umfassend
einen glühbirnenähnlichen, zumindest abschnittsweise lichtdurchlässigen Hohlkörper (12) mit einem standardisierten Lampensockel (14) zur Verbindung mit einem Stromnetz und einem in dem Hohlkörper (12) befindlichen Leuchtmittel (22), wobei das Leuchtmittel (22), nämlich eine LED (22), durch den Lampensockel (14) mit dem Stromnetz verbunden ist,
ein PLC-Modul (18) zur Datenübertragung in das Stromnetz, wobei das PLC-Modul (18) zumindest teilweise in dem Hohlkörper (12) aufgenommen ist,
einen Controller (20),
einen Transceiver (26), insbesondere einen Wifi-Transceiver (26), der von dem Controller (20) gesteuert wird,
wobei das PLC-Modul (18) über das Stromnetz eine datenleitende Verbindung zu einem lokalen Netzwerk ausbildet, wobei der Transceiver (26) eine Wireless Local Area Network (WLAN) Access Point-Funktionalität ausbildet,
wobei in dem Hohlkörper ein Schalter zum An- bzw. Ausschalten der Vorrichtung vorgesehen ist, wobei der Schalter ausgebildet ist, die Energiezufuhr zum Controller nicht zu unterbrechen, wobei der Controller eingerichtet ist eine WLAN Funktionalität und die LED unabhängig voneinander an bzw.- auszuschalten,
**dadurch gekennzeichnet,**
**dass** der Schalter (24) das An- bzw. Ausschalten der Vorrichtung tageszeitabhängig mittels des Controllers (20) steuert, wobei ein Nutzer mittels geeigneter Software festlegt zu welchem Zeitpunkt die LED leuchtet oder welchen Zeitpunkt die WLAN Access Point Funktionalität aktiv ist, wobei entsprechende Befehle des Nutzers über das Stromnetz oder über die WLAN Access Point Funktionalität an den Controller sendbar sind.

2. Vorrichtung, nach Anspruch 1, wobei durch den Controller (20) ein Stromfluss zur Helligkeitregulierung steuerbar ist.

3. Vorrichtung, nach einem der vorherigen Ansprüche, wobei ein Sensor vorgesehen ist, durch den mittels des Controllers (20) die Helligkeitsregulierung des Leuchtmittels (22) steuerbar ist.

4. Vorrichtung, nach Anspruch 3, wobei der Schalter (24) durch den Controller (20) auslösbar ist und die Funktionalität eines Dimmers bereitstellt.

5. Vorrichtung, nach Anspruch 4, wobei der Schalter über das PLC-Modul (18) steuerbar ist.

6. Verwendung einer Vorrichtung nach einem der vorherigen Ansprüche in einer Außenfassadenbeleuchtung.

7. System, umfassend
eine Vielzahl von Vorrichtungen nach einem der Ansprüche 1 bis 5,
ein PLC-Netzwerk (42),
wobei die Vorrichtungen durch das PLC-Netzwerk (42) mit einer zentralen Mobilitäts- und Adressverwaltung (44) verbunden sind, und
dass hierdurch ein virtueller WLAN-Zugangspunkt in Form von Hot-Spots ausgebildet ist.

## Claims

1. An apparatus comprising
a hollow body (12) resembling a lightbulb, at least a part of which is translucent, with a standardised lightbulb socket (14) for connection to a power grid, and a light source (22) located in the hollow body (12), wherein the light source (22), specifically a LED (22), is connected to the power grid via the lightbulb socket (14),
a PLC module (18) for transmitting data to the power grid, wherein at least a part of the PLC module (18) is contained inside the hollow body (12),
a controller (20),
a transceiver (26), in particular a WiFi-transceiver (26) which is controlled by the controller (20),
wherein the PLC module (18) forms a data-conducting connection with a local network via the power grid, wherein the transceiver (26) forms a Wireless Local Area Network (WLAN) access point functionality,
wherein a switch is provided in the hollow body for switching the apparatus on and off, wherein the switch is designed so as not to interrupt the energy supply to the controller, wherein the controller is configured to switch a WLAN functionality and the LED on and off independently of each other,
**characterized in that**
the switch (24) controls the switching on and off of the apparatus as a function of the time of day via the controller (20), wherein a user using suitable software defines the point in time at which the LED lights up or the point in time at which the WLAN access point functionality is active, wherein corresponding commands by the user can be sent to the controller via the energy supply or via the WLAN access point functionality.

2. The apparatus according to Claim 1, wherein the current flow is controllable by the controller (20) for regulating brightness.

3. The apparatus according to either of the preceding claims, wherein a sensor is provided, by means of which the controller (20) is able to regulate the brightness of the light source (22).

4. The apparatus according to Claim 3, wherein the switch (24) can be triggered by the controller (20) and provides the functionality of a dimmer.

5. The apparatus according to Claim 4, wherein the switch is controllable via the PLC module (18).

6. A use of an apparatus according to any one of the preceding claims in an exterior façade lighting system.

7. A system comprising
a multiplicity of apparatuses according to any one of Claims 1 to 5,
a PLC network (42),
wherein the apparatuses are connected to a central mobility and address administration (44) via the PLC network, and that a virtual WLAN access point in the form of hot spots is created thereby.

## Revendications

1. Dispositif comprenant :
un corps creux (12) en forme d'ampoule au moins partiellement perméable à la lumière avec une base de lampe normalisée (14) en vue de la connexion à un système d'alimentation et un moyen d'éclairage (22) situé dans le corps creux (12), dans lequel le moyen d'éclairage (22), à savoir une LED (22), est connecté au réseau électrique via la base de la lampe (14),
un module PLC (18) pour la transmission de données dans le réseau électrique, dans lequel le module PLC (18) est au moins partiellement logé dans le corps creux (12),
un contrôleur (20),
un émetteur-récepteur (26), en particulier un émetteur-récepteur WiFi (26), qui est commandé par le contrôleur (20),
dans lequel le module PLC (18) forme une connexion conductrice de données avec un réseau local via le réseau électrique, dans lequel l'émetteur-récepteur (26) forme une fonctionnalité de point d'accès de réseau local sans fil (WLAN), dans lequel dans le corps creux un commutateur est prévu afin d'allumer ou d'éteindre le dispositif, dans lequel l'interrupteur est conçu pour ne pas interrompre l'alimentation du contrôleur, dans lequel le contrôleur est configuré pour activer et désactiver une fonctionnalité WLAN indépendamment les unes des autres,
**caractérisé en ce que** l'interrupteur (24) commande la mise en marche et l'arrêt du dispositif en fonction de l'heure au moyen du contrôleur (20), dans lequel un utilisateur définit au moyen d'un logiciel approprié à quel moment la LED s'allume ou à quel moment la fonctionnalité du point d'accès WLAN est active, dans lequel des injonctions de l'utilisateur peuvent être envoyées au contrôleur via le réseau électrique ou via la fonctionnalité d point d'accès WLAN.

2. Dispositif selon la revendication 1, dans lequel un flux de courant pour la régulation de la luminosité peut être commandé par le contrôleur (20).

3. Dispositif selon une des revendications précédentes, dans lequel un capteur est prévu, par l'intermédiaire duquel la régulation de la luminosité des moyens d'éclairage (22) peut être commandée au moyen du contrôleur (20).

4. Dispositif selon la revendication 3, dans lequel l'interrupteur (24) peut être déclenché par le contrôleur (20) et assure la fonctionnalité d'un variateur.

5. Dispositif selon la revendication 4, dans lequel l'interrupteur peut être commandé via le module PLC (18) .

6. Utilisation d'un dispositif selon une des revendications précédentes dans l'éclairage de façade extérieure.

7. Système comprenant une pluralité de dispositifs selon une quelconque des revendications 1 à 5, un réseau CPL (42), dans lequel les dispositifs sont connectés à une unité de gestion de mobilité et d'adresses centrale (44) à travers le réseau CPL (42), et que cela crée un point d'accès WLAN virtuel sous la forme de points chauds.
